# EUROPEAN PATENT APPLICATION

(11) **EP 2 020 775 A1**
(43) Date of publication of application: **04.02.2009**
(21) Application number: 07015306.9
(22) Date of filing: 03.08.2007
(51) Int. Cl.: H04L 12/24, H04L 12/26

(54) **Method of processing network related data, devices, system and computer program products**

(71) Applicant: Nokia Siemens Networks Oy, 02610 Espoo (FI)
(72) Inventor: Krishna Gopal DHALL, 144401 Phagwara (IN); T. KABILAN, 560043 Bangalore (IN); Raghavendra PD, 560 050 Bangalore (IN)
(74) Representative: Bruglachner, Thomas E.

(57) **Abstract**

A method of processing of network related data (236) is described, comprising:
- generating first data (235) during the operation of a network,
- adding/supplementing second data (236) to the first data, updating a data base by using the second data (236),
the updating comprising the search of the data base for an entry containing the second data (236).

## Description

The invention is in the field of data transmission. More specifically, the invention pertains to a method of processing network related data. The network may comprise a plurality of network elements.

The network elements are, for instance, public exchanges or cross connects, switches or routers. The network elements may comprise data about managed objects, for instance:
- rack data,
- shelf data,
- card data,
- transmission line data or link data, for instance with regard to a radio channel or an electrical or optical line,
- logical data, i.e. data describing software.

Management systems for telecommunication networks are described in standards of the ITU-T (International Telecommunications Union - Telecommunications Standardization Sector), see for instance, X.700 to X.734, M.3000, M.3010, M.3100.

Management systems for computer networks are described in de facto standards of the IETF (Internet Engineering Task Force), SNMP (Simple Network Management Protocol), see for instance, RFC 1155 to 1157 (SNMP version 1), 1441 to 1447 and 1901 to 1908 (SNMP version 2), 3410 to 3418 (version 3).

The latest efforts to create a standard for management systems come from the Tele Management Forum TMF, see for instance TMF 513 or TMF814, TMF 814A.

The management system may be an embedded system that is delivered with the network or it may be a stand alone system. An example for a telecommunication management system (TMN) is the TNMS by Nokia Siemens Networks GmbH & Co. KG.

What is needed is a method that allows a very simple and efficient evaluation of network data, especially if the network has many network elements, for instance more than 100 network elements, e.g., several hundreds.

It is an object of the present invention to provide a simple method of processing network related data. Furthermore, devices, system and computer program products shall be provided that may be used to carry out the method.

This object is solved by the method of claim 1. Embodiments are given in the sub claims.

A method of processing network related data is provided, comprising:
- generating first data during the operation of a network,
- adding/supplementing second data or tag data to the first data,
- updating a data base by using the second data,
- the updating comprising searching the data base, especially by using the second data as a search criterion.

The first data may be network data that are automatically generated by the network or that are entered by an operator/administrator, e.g., a command. The network data may be named primary data. The second data may describe the first data and may be named secondary data. The second data are preferably text data that are readable by users.

A data base may be provided that contains entries for names that describe data which are generated during the operation of the network.

The updating may comprise:
- searching the data base for an entry containing the second data.

If an entry is found in the data base, this entry may be used for updating. If no entry is found, a new entry may be created.

The updating may further comprise:
- incrementing a counter that counts how often data that comprise the second data are used.

Thus, a category may be created based on the values of the counters. For example, "most used" entries have the highest values of the counter. The category may relate to an overall basis, or to a certain time interval, e.g., a week or a month. Statistics for the category "most used" may be displayed to a user, for instance, after demand by the user/operator or without such demand.

The updating may comprise:
- storing time data that indicate when the second data were used, especially when they were last used.

Thus, another category may be created based on the values of the time data. For instance, "most recently used" entries have the highest or the newest time data. Statistics for the category "most recently used" may be displayed to a user on demand by the user/operator or without demand.

The updating may comprise:
- storing relationship data describing the relationship of the second data to at least third data that are also used to comment or to describe first data.

Thus, it is possible to visualize relationships among tags to a user. This enables the user to estimate the meaning of the tags more appropriately.

Other data that are used to comment or to describe the first data may also be stored for instance:
- the place of a network element.

The adding of the second data may be done automatically. For instance by using an expert system, for instance, based on rules, based on a fuzzy method and/or on a neural network.

Alternatively, the adding may comprise:
- suggesting the second data automatically. Thus the user or operator may select among a plurality of relevant items, for instance presented in a list, and/or confirms the use of only one item that seems appropriate.

The suggesting may comprise:
- searching the data base based on a part of an input,
- suggesting second data that were found in an entry of the data base and that comprise the part of the input.

This will allow the operator to speed up the input. Furthermore, it is possible for the operator that he only remembers some part of the tags.

The network may be one of:
- a telecommunication network,
- a computer network,
- a power network,
- another network which creates management data.

A telecommunication network may comprise exchanges, for instance circuit switched exchanges. The telecommunication network may be an asynchronous network (ATM - Asynchronous Transfer Mode), a synchronous network (SDH - Synchronous Digital Hierarchy/SONET - Synchronous Optical NETwork), especially an optical network. Alternatively a cellular network may be used, for instance GSM (Global System for Mobile Communications), UMTS(Universal Mobile Telecommunications System)).

The computer network may be an Ethernet network. The computer network may comprise switches and routers. The computer network is preferably an IP (Internet Protocol) network, especially the Internet itself or a private IP network.

A power network is used for the distribution of electrical power, for instance to a plurality of cities or villages.

The first data may be one of:
- configuration data,
- accounting data,
- performance data,
- security data,
- fault data.

The first data may be a command that is executed in the network, preferably a command for configuring the network. This allows, for instance, to relate tags in alarms, events, etc. to executed commands.

These data are transmitted, for instance, using alarm messages, fault messages or event messages.

The second data may explain the first data in more detail or the second data may describe the reason for generating the first data. Therefore, the second data help an operator to describe the network data and to understand the processes in the network in more detail.

The method may comprise:
- performing a search request for network data by using the second data as a search criterion.

Using this kind of search the user may evaluate the network data by using tags in a very user friendly manner.

The invention also relates to a device, especially for performing the methods mentioned above. The device comprises:
- a processing element, and
- a memory for storing program data for executing the following method:
- adding/ supplementing second data to first data that are generated during the operation of a network, and
- updating a data base by using the second data,
- the updating comprising a search in the data base.

The device may comprise:
- a data base for storing entries based on the second data. The data base may be a centralized data base for the overall network, a centralized data base for a specific layer of management or a data base for specific data. Alternatively, the data base may be a distributed data base that is located in several network elements.

Furthermore, a computer program product is provided, comprising at least one computer readable storage medium having a computer readable program code stored therein, the computer readable program code comprising a first executable portion for:
- adding/ supplementing second data to first data that are generated during the operation of a network, and
- updating a data base by using the second data,
- the updating comprising a search in the data base.

The computer program product may be for instance a compact disk, a floppy disk, a hard disk, a memory stick etc. The computer program product may, for instance, be used to distribute the program for performing the method of the invention. The program may also be distributed via the Internet. Furthermore, the computer program product may relate to an embodiment of the method of the invention.

Therefore, the technical effects stated above are also valid for the device and for the computer program product.

A method of supplementing second data to first data generated in a network is provided, comprising:
- providing a rule for automatically generating second data,
- generating first data during the operation of a network,
- supplementing second data to the first data by applying the provided rule, especially automatically supplementing.

The first data may be data that relate to an alarm. The alarm may be created in a network element. The alarm data may include data according to an international standard and may, for instance, comprise data describing a class of problem, data describing the cause of the problem and/or data for identifying the network element itself.

The second data may also be referred to as tag data or simply tag. The tag data may comprise data that describe the first data and are preferably text data, i.e. data that can be read by a user.

Therefore, the first data also become more understandable to users. Furthermore, it is easier to implement rules for automatically processing of the first data by referring to the second data because the second data are easier to use than the first data alone. It is, for instance, possible to create or change rules that are based on the second data and optionally on the first data, especially automatically or manually.

The first data may be stored in a data base. The second data may be supplemented to the first data after storing the first data in the data base. This means that the second data are not created together with the first data but are supplemented later, for instance more than one (1) minute later or more than one (1) hour later. Thus, it is, for instance, possible to add the second data (tag) after correlation of alarms, i.e. only for some of a plurality of alarms that are not suppressed. The tagging of only selected alarms reduces the processing time significantly.

The first data and the second data may be shown to a user for the first time after supplementing the second data to the fist data. This means that the second data are supplemented automatically, i.e. without the help of a user. Automatically tagging saves a lot of OPEX (OPerational EXpenditure).

The supplementing may alternatively be done together (i.e. almost at the same time) with the generation of the first data. The time between the first generation of the first data, for instance alarm data, and supplementing the second data to the first data may be less than one second. This immediately tagging enables the processing of the first data based on the second data (tags) at all processing steps, i.e. from the beginning.

A plurality of data may be correlated to a single event in the network after supplementing the second data. This means that the second data may be used for the correlation. It is possible to use correlation rules that are based on second data. The technical effect is that it is possible to reduce the amount of alarms by using the second data compared with the case where no such second data are used for correlation. Furthermore, it is possible to create and/or change the correlation rules easier because it is easier for a user to understand these rules that are based on the second data. The second data may be used with the first data or only first data may be used for correlation.

An alarm generation rule may depend on the second data, i.e. on the presence of second data or on the content of the second data. The alarm generation rule is used for the generation of alarms depending on threshold values, for instance. "Depend" may mean that the second data may be part of the assumption for applying the generation rule. Again, the generation rule can be more efficient than rules that do not relate to second data. Furthermore, the alarm generation rule may be created and/or modified easier compared with rules that do not relate to second data or tag data. It is easy for a user to understand the alarm generation rule if tags are used. This is true even if there is a long time between the creation/change of a rule and a later change of this rule.

The alarm generation rule may replace another rule for alarm generation. This is described in more detail below with regard to feedback 1. The replacement may be done manually or automatically. Thus it is possible to have a dynamic processing based on tags or second data. Short time periods may be used, for instance shorter than one (1) day. Especially, the replacement is done automatically, without involving any user action.

The first data, e.g. alarm data, may be shown to a user together with the second data. Alternatively, the user may supplement the second data to the first data. The second data or both the first data and the second data may be used to modify an alarm generation rule by a user or in response to an action of the user. Comparable long time periods may be used, for instance longer than one (1) month. This changing is described below with regard to feedback 2 in more detail. Such a long term changing can be easily performed by using the second data because this data are easy to understand for a user.

The first data may be alarm data that are created because there was an unexpected event in a network element of the network or in the network itself. The unexpected event may, for instance, be a power failure. The unexpected event effects that a threshold value is exceeded or not reached or that a parameter is outside a given range.

The second data may be text data or may comprise text data, for instance ASCII (American Standard Code II) text. Thus, it is easy to display the text data on a screen without additional steps. The text data are readable by a user and therefore very helpful for alarm acknowledgement and/or alarm clearance.

The second data may describe the first data in more detail. Alternatively, the second data may relate to an event that was the cause for the creation of the fist data. Furthermore, the second data may describe an action, especially with regard to a user (network operator, network administrator) that has to be taken for the first data, for instance "ignore".

The second data may be selected from a list of given items. The items are, for instance, given in advance by an administrator that administers the selectable items of second data for a plurality of users or operators. Alternatively the list may be created by a plurality of users during a process of negotiating tags.

A data base may be updated using the second data. The updating may comprise:
- searching the data base for an entry containing the second data.

The updating of the data base may be done automatically to trace the use of second data (tags). The updating may comprise:
- incrementing a counter that counts how often data that comprise the second data are used.

Thus, it may be possible to define at least one of the following search criteria:
- most used tags,
- most recently used tags.

The second data may be selected from a plurality of pre-given items, for instance, from a list that is presented to a user when the input of a tag is requested by a computer. Alternatively, the user may have such a list in mind. The computer may supervise the use of tags, e.g., by checking whether the tag is already stored in a data base. If the tag is not found in the data base the data base may be updated automatically or the use of the tag may be prohibited.

The invention also relates to a device, especially for performing the method of supplementing second data to first data or its embodiments,
comprising:
- a processing element, and
- a memory for storing program data to execute the following method:
   - providing a rule for automatically generating second data,
   - generating first data during the operation of a network,
   - supplementing second data to the first data by applying the provided rule.

Furthermore, a system is given, comprising this device and a correlation unit that correlates a plurality of data to a single event in the network by using the second data.

A computer program product is also provided, comprising at least one computer readable storage medium having computer readable program code stored therein,
the program code comprising:
a first executable portion for:
   - providing a rule for automatically assigning second data to first data,
   - generating first data during the operation of a network,
   - supplementing second data to the first data by applying the provided rule.

The computer program product may be for instance a compact disk, a floppy disk, a hard disk, a memory stick etc. The computer program product may, for instance, be used to distribute the program for performing the method of the invention. The program may also be distributed via the Internet. Furthermore, the computer program product may relate to an embodiment of the method of the invention.

Therefore, the technical effects stated above are also valid for the device, the system and for the computer program product.

In the following, embodiments of the invention are described with reference to the Figures, wherein:
- Figure 1: illustrates the overall architecture of a TMN system,
- Figure 2: illustrates method steps for processing network data and network related data,
- Figure 3: illustrates tag data,
- Figure 4: illustrates a user interface enabling a search using tags,
- Figure 5: illustrates a user interface displaying search results,
- Figure 6: illustrates a user interface for fault management,
- Figure 7: illustrates a user interface for performance management,
- Figure 8: illustrates a network and parts of a network management system for managing the network,
- Figure 9: illustrates the processing of alarms,
- Figure 10: illustrates alarm generation policy adjustment (feedback 1) using tags,
- Figure 11: illustrates alarm correlation policy without using tags,
- Figure 12: illustrates alarm correlation policy using tags,
- Figure 13: illustrates alarm generation policy adjustment (feedback 2) using tags,
- Figure 14: illustrates an automatic alarm tagging environment, and
- Figure 15: illustrates a rule for automatic tagging of alarms.

The embodiments are only for illustrative purposes and do not restrict the scope of the invention. The same reference signs refer to the same technical features if not stated otherwise. As far as "may" is used in this application it means the possibility of doing so as well as the actual- technical implementation.

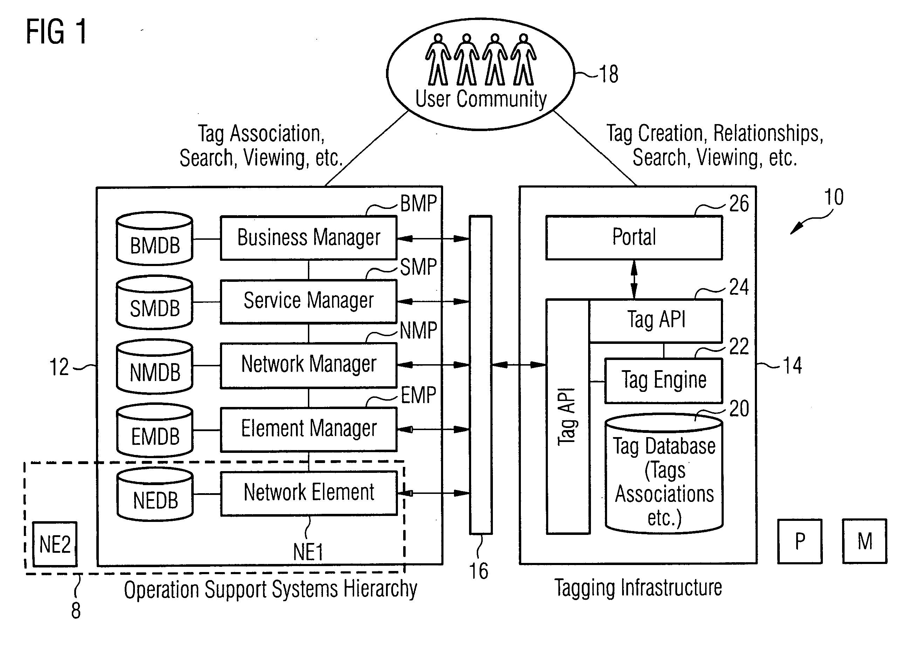

Figure 1 illustrates the overall architecture of a TMN (Telecommunication Management Network) system 10 for managing a telecommunication network 8. In Figure 1, two network elements NE1 and NE2 of network 8 are shown.

The TMN system 10 comprises:
- an operation support system (OSS) 12,
- a tagging infrastructure system 14,
- an interface 16.

The TMN system 10 is used by a user group or operator group 18, for instance by more than 10 or more than 100 people, typically in the range of 500 to 1000 people. The user group 18 creates a tagging system for network data. The technical details for implementing the tagging feature will be described in more detail below.

The operation support system (OSS) 12 has a hierarchical structure of five levels in the example. Alternatively, the system 12 may comprise more or less levels. The levels are implemented from higher levels to lower levels by:
- a business manager program BMP,
- a service manager program SMP,
- a network manager program NMP,
- an element manager program EMP,
- a network element NE1, NE2.

The functions of the levels may correspond to the functions described in ITU-T, X.700, or in IETF, SNMP, or in other standards, for instance proprietary standards, too.

In the example, each level of system 12 has its own data base:
- a business manager data base BMDB,
- a service manager data base SMDB,
- a network manager data base NMDB,
- an element manager data base EMDB,
- a network element data base NEDB.

Alternatively, there may be only one data base for each level in system 12 or a data base may be used by more than one level. The data bases in system 12 may be centralized or distributed. The data bases in system 12 store, for instance:
- configuration data,
- accounting data,
- performance data,
- security data,
- fault data.

The data in data bases of system 12 may be generated by alarm messages, event messages, etc. The data in each of these data bases may be tagged using the tagging infrastructure 14. Furthermore, it is possible to search for entries that have specific tags in these five data bases and/or to display data including the tags.

The tagging system 14 comprises, for instance,
- a tag data base 20,
- an optional tag engine 22,
- a tag interface 24, and
- a portal program 26.

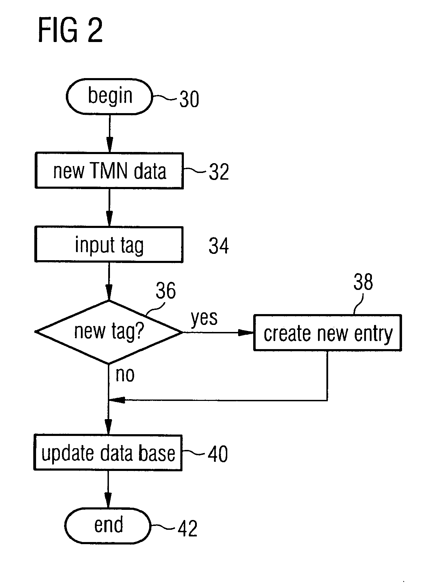

The tag data base 20 comprises data that describe tags that are already in use. Furthermore, meta data, i.e. data for a tag, may be stored for each tag data in data base 20. Data base 20 does not have direct relations to the data bases of the system 12. However, there is an indirect relation because many users/operators 18 use the tags of data base 20 to tag management data. Furthermore, data base 20 is updated if a new tag is used for describing the network data, preferably for each new tag or on user demand. The meta data of data base 20 may also be updated if a user uses an old tag or a new tag to describe network data. The update of the meta data may be done each time a tag is used or on user demand. The description of Figure 2 will explain these methods in more detail.

Alternatively, there are tag data bases for each level of OSS system 12. The tag data base 20 may be centralized or distributed.

The optional tag engine 22 may be used to suggest tags to the user or to automatically assign tags to network data based on learned or predetermined rules.

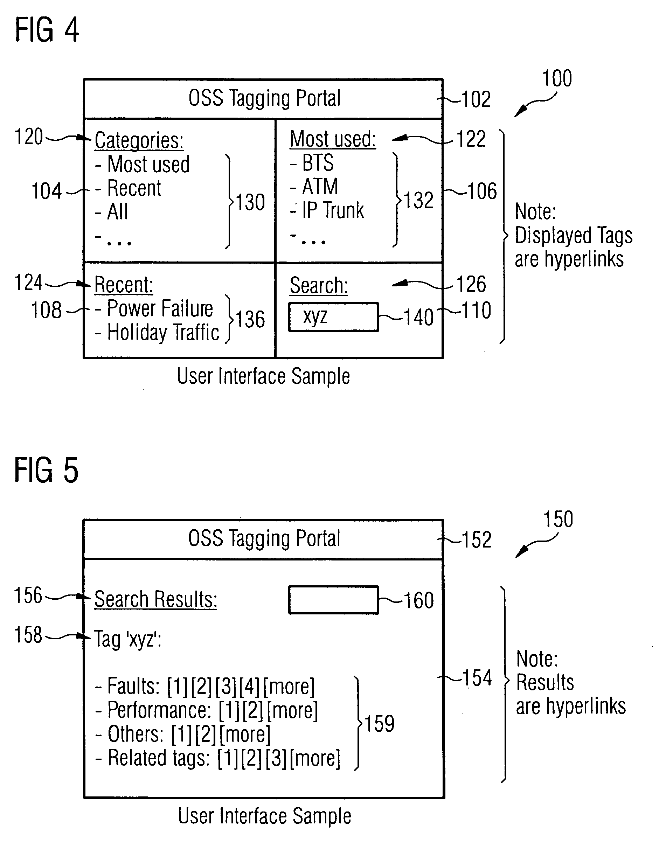

The tag interface 24 enables system 12 and user portal program 26 to access the tag data base 20. Portal program 26 may be a browser program or a specific program for user interaction, see for instance the description of Figures 4 to 7 below.

The interface 16 may be an internal interface of system 10 or an external interface. For example, interface 16 may be implemented using a message interface, using a memory segment for data exchanges, or by calling specific program procedures.

Figure 1 also shows a processor P and memory M for storing program. The methods described in the following are performed if the processor executes instructions of the stored program. Alternatively, it is possible to use an electronic hardware without using software to implement the methods.

Figure 2 illustrates method steps for processing network data and network related data. The method begins in step 30. In a step 32 that is performed after step 30, new TMN data are created, for instance manually or automatically, e.g. alarms, events, commands etc.

In step 34, a user inputs tag data to describe the network data or TMN data in more detail. The user may be supported by an automatic system that proposes tags, for instance based on some current input of the user and/or based on previous inputs. The user may select from the suggestions and/or may confirm an item.

In step 36, it is checked if a new tag was created in step 32. Step 38 follows immediately after step 36 if a new tag has been created. In step 38, system 10 creates a new entry in tag data base 20 for the new tag. Then, the method proceeds with step 40.

Step 40 is performed immediately after step 36 if a tag is used that was already stored in data base 20. In step 40 data base 20 is updated, for instance a counter is incremented that counts the use of a specific tag. Alternatively or additionally, time data may be stored for that tag indicating the time of the last use of the tag. Furthermore, a relation to other tags may be stored that are used together with the tag that was entered in step 34 by the user/operator.

The method ends with step 42, for instance, after the network data and the tag that was entered or the tags that were entered in step 34 are stored in one of the data bases of system 12, for instance in the network element data base NEDB.

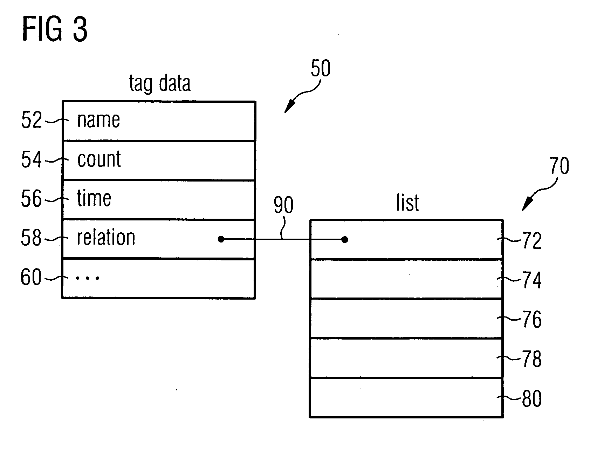

Figure 3 illustrates the structure of tag data 50. The data tag 50 may have the following data fields 52 to 60:
- a data field 52 stores the name of the tag, for instance "Power failure",
- a data field 54 stores a value that gives the total number of uses of the tag, for instance five uses of tag "Power failure",
- a data field 56 stores the time of the last use of the tag, for instance 8:00 p.m. for the tag "Power failure",
- a data field 58 stores the relation of the tag to other tags, for instance to tags that are used together or to tags that where entered by the user for that purpose.
- optional further data fields 60.

In the example, a data list 70 is used to store the names of tags that are related to tag data 50. The data list 70 contains, for example data fields 72 to 80. A relation 90 may be implemented by using a data pointer, i.e. a memory address that identifies the beginning of the data of list 70. Alternatively, other data structures may be used, for instance data tables.

Figure 4 illustrates a user interface UI enabling a search using tags. The user interface comprises displayed data 100 including:
- a title 102, for example "OSS Tagging Portal",
- a displayed field 104 in the upper left hand quadrant,
- a displayed field 106 in the upper right hand quadrant,
- a displayed field 108 in the lower left hand quadrant, and
- a displayed field 110 in the lower right hand quadrant.

The displayed fields 104 to 110 have the following sub titles in this order:
- sub title 120 "Categories:" indicates that field 104 lists the categories of tags available,
- sub title 122 "Most used" indicates that field 106 lists the most used tags,
- sub title 124 "Recent" indicates that field 108 lists the most recently used tags, and
- sub title 126 "Search" indicates that field 110 may be used to perform a search for tags, i.e. in data base 20.

Field 104 lists the following items 130:
- "Most used", to indicate that there is a category for the most used tags,
- "Recent", to indicate that there is a category for the tags most recently used by users/operators,
- "All", to indicate that the tags can be listed without considering categories,
- "...", to indicate that there may be some more categories.

Field 106 lists the following items 132:
- "BTS" (Base Transceiver Station), to indicate that there is a tag that has something to do with a Base Transceiver Station, for instance of a GSM (Global System for Mobile Communications) network,
- "ATM" (Asynchronous Transfer Mode), to indicate that there is a tag that relates to an ATM network,
- "IP (Internet Protocol) Trunk", to indicate that another tag relates to an IP network or more specifically to an IP trunk, i.e. a link between two routers.
- "...", to indicate that there may be further kinds of tags.

Field 108 lists the following items 134:
- "Power failure", to indicate that the network went down because there was not enough power. This tag was mentioned above with regard to Figure 3.
- "Holiday traffic", to indicate that tag and later the tagged network data have something to do with a holiday, for instance with Thanksgiving.

Field 110 contains an input field 140, for instance to input text that is readable by users/operators. In the example input field 140 contains the text "xyz", i.e. the search request.

The tags displayed in Figure 4 may be hyperlinks. Therefore, it is possible to click on these tags with a mouse pointer and to get more information about these tags, for instance all meta data (count, time, etc).

Figure 5 illustrates a user interface displaying search results. The user interface comprises displayed data 150 including:
- a title 152, again "OSS Tagging Portal" is used, for example,
- a lower displayed field 154.

The lower displayed field 154 comprises:
- a sub title 156, for example, "Search results" to indicate that the search results are displayed in the displayed field 156,
- the searched text 158, in the example "xyz",
- again an input field 160, to search within the results or to start a new search, and
- found items 159.

In the example, the following items 159 were found:
- Faults: [1] [2] [3] [4] [more], i.e. fault data records that are tagged by the tag "xyz",
- Performance: [1] [2] [more], i.e. performance data that are tagged by "xyz",
- Other: [1] [2] [more], i.e. other data that are tagged by "xyz"
- related tags: [1] [2] [3] [more], i.e. tags that are related to tag "xyz".

The search results may be hyperlinks. Therefore, it is possible to click on these items to get more information about a specific item.

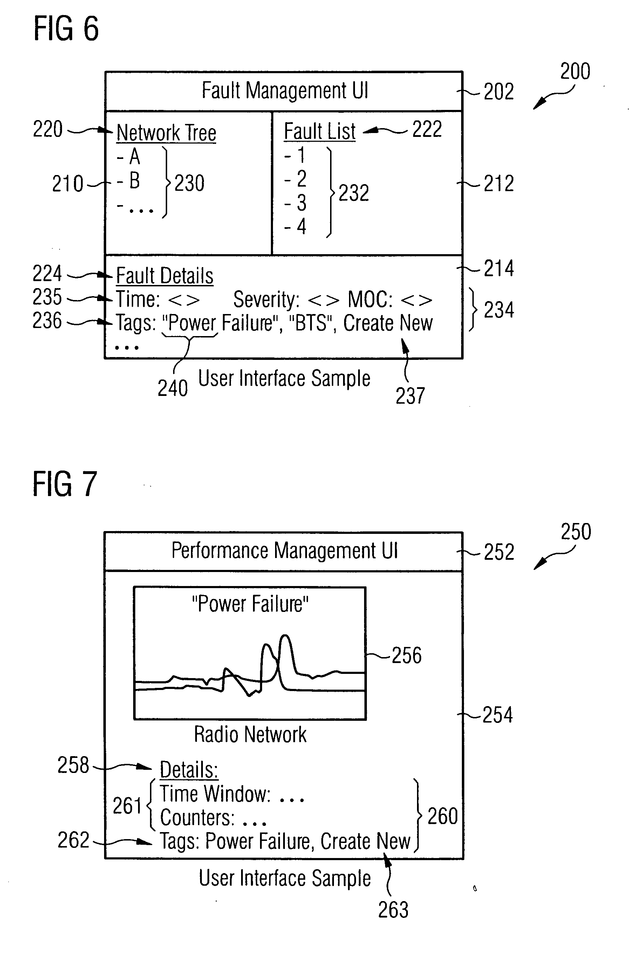

Figure 6 illustrates a user interface for fault management. The user interface comprises displayed data 200 including:
- a title 202, e.g., "Fault Management UI", to indicate that a user interface for fault management is displayed,
- a displayed field 210 below the title in the upper left hand part,
- a displayed field 210 below the title in the upper right hand part, and
- a displayed field 214 in the lower part of displayed data 200.

The displayed field 210 has a sub title 220 "Network Tree" to indicate that this field 210 shows network elements of a network tree that may correspond to the topology of the network. In the example, the following items 230 are displayed in field 210:
- A, to indicate that there is a network element A,
- B, to indicate that there is a network element B,
- "...", to indicate that there are further network elements.

It is also possible to visualize the network tree in a more sophisticated manner by using graphic elements.

The display field 212 has the subtitle 222 "Fault List" to indicate that it relates to faults. In the example, the following items 232 are displayed in field 212:
- 1, to indicate a first fault,
- 2, to indicate a second fault,
- 3, to indicate a third fault,
- 4, to indicate a fourth fault.

The displayed field 214 has the title 224, e.g., "Fault Details", to indicate that details of a fault are displayed. For instance, the details of a fault are displayed in field 214. This fault was listed in one of items 232 and was selected by the user/operator.

In the example, the details contain the following items 234:
- network data 235, that may indicate the time at which the network data were generated, the severity of the fault, the managed object class (MOC) of the network element that generated the fault, etc.
- comment data 236 that were added by the user or by an expert system, for instance the tags "Power failure" and "BTS".
- a "create new" item 237 that enables the user/operator to add further tags to describe the fault in more detail or to relate the fault, for instance, to other faults or commands by using the same tags.

It is, for instance, possible that the user inputs the first part of the tag "Power failure", i.e. "Power", see reference sign 240. The system 10 may then automatically suggest the complete tag, i.e. "Power failure". The user may accept this or type in another tag, for instance "Power recovery". It is also possible to present a list to the user that contains more than one tag with the part 240, i.e. "Power".

All items 230 to 234 may again be hyper links.

Figure 7 illustrates a user interface for performance management. The user interface comprises displayed data 250 including:
- a title 252, e.g. "Performance Management UI", to indicate that a user interface for performance management is displayed,
- a displayed field 254.

The displayed field 254 comprises a diagram 256 in the upper half showing two plots of counter values for numbers of alarms or events in predetermined intervals in a radio network during a predetermined time window. One plot relates to a first part of the network that went down by a power failure. The other plot relates to a different part of the network that was used to compensate for the power failure.

A subtitle 258 "Details" indicates that the details for the shown events are displayed in the lower part of the displayed field 254.

The details comprise, for example,items 260, i.e.:
- network data 261, for instance data to specify the time window that contains the time of the power failure and/or data that relates to the counters that counted the alarms and/or events (notifications),
- comment data 262 that were added by the operator, for example the tag "Power failure".

Furthermore, it is possible to use a "create new" item 263 to add a further tag. The further tag may be already stored in data base 20 or it may be a new tag. If a new tag is added, the data base 20 is updated accordingly as described above with regard to Figure 2.

The items 260 may again be hyper links.

In the following there is a summary of the technical teachings for an OSS (Operation Support System) tagging infrastructure.

Large multi-vendor multi-technology telecommunication networks produce enormous amounts of data on a continuous basis, e.g., alarms, performance data, a variety of logs. It is the job of the management system to process this data and to produce useful and actionable information to human operators of the network. The same problems may arise in other operation support systems, e.g., computer networks, IP (Internet Protocol) networks.

Typically there is no "monolithic" management system, but a series of systems organized in layers, for instance:
- business management,
- service management,
- network management,
- element management.

The following ideas are addressed by the invention:
1. Multiple applications and corresponding user interfaces are provided to the human operator. These applications have their own way of categorizing and displaying information. The human operator often has limited control over this categorization and display. Examples are:
   a) A fault management system may group faults based on commonly occurring alarm fields. But, the user, out of experience or based on circumstantial know-how, may want to group and mark a set of alarms as related. This user grouping and marking may not be constant over the time and can change.
   b) A configuration management system may allow the user to group executed commands based on target systems, time, etc. But the user may want to group commands or mark commands based on different parameters.
2. A group of users in a given field of expertise often develop taxonomy (user language) of terms to easily identify/group information in their field. Management systems do not provide mechanism for operators to label information neither manually nor automatically as per their taxonomy or their language.
3. Different layers of management systems are independent. It is not easy for an operator to correlate information across layers.

Within a fault management program users may have an option to enter something called "operator hint", for instance, on a per alarm basis. This would be more intended for the operator to record steps and other useful information. But the operators would not have the possibility to list all alarms with a certain hint or to relate the hints in the alarm to a command executed.

Another approach may be the use of data mining or of intelligent correlation software, e.g. expert system based, that tries to learn based on human training or from human inputs. But this would only partly solve the problem with arranging certain parts of management information, for instance fault management data.

Therefore, these approaches would not solve the problems mentioned above efficiently.

Here, a "tag" or a "label" is used that is a keyword generated by a user and that the user may associate with information. Multiple tags are typically associated to the same data, for instance to an event, an alarm etc. Once associated, the tags help in organizing information, e.g. grouping, displaying and searching, in a meaningful way for human users. The concept of a group of users associating tags with information may be used across management systems to aid in fast categorization of information and taking suitable action. Some example cases of use under different aspects of the network are listed below to explain the concept:

### Fault management:

- The user can assign a tag to a group of alarms to mark them as related, e.g. "Power failure".
- The user can assign a tag to individual alarms or groups of alarms. The user may assign the same tag to other data to record relationship between them, for instance to configuration management commands and or to an operating procedure.

### Configuration management:

The user can assign a tag to an individual executed command or to a group of executed commands. The tag may be used elsewhere to record a relationship, for instance "IP trunk expansion".

### Performance management:

The user is examining network performance data, for instance a set of counters for a given duration of time. The user assigns a tag for the data, for instance "Thanksgiving peak".

### General:

The user may train an intelligent system, for example an alarm correlation module, to automatically assign meaningful tags to information after taking action.

The use of tagging is proposed, for instance, in telecommunication networks, complementary to existing operation and maintenance mechanisms as a form of flexible human classification of information.

### Part A: Tagging infrastructure (see Figures 4 and 5)

This consists of:
a) Persistent storage that stores all the information related to tags:
   - All tags that are created,
   - Meta data associated with tags, for instance count, time, etc.
   - Bi-directional or uni-directional relationship between related tags, for instance which tags are related or which tags were used together.
   - Categories of tags, for example most used, recent, new, etc.
b) (Application) Programming interface and optional "intelligent" engine for the creation and manipulation of the tags:
   - to create tags,
   - to provide a list of available tags,
   - to associate tags to OSS information,
   - to search all items which have a given tag,
   - to create categories or classes of tags,
   - to identify relationship between tags by examining the associations.
c) User interface, for example a portal, to view tag related information:
   - to show various categories, e.g. recent, most used, etc., of tags, for instance using hyperlinks,
   - to allow the user to examine all the tags in the system, i.e., tags of all the users,
   - to allow the user to search for items which have a given tag,
   - to display the search results that concisely show all OSS information for a given tag.

### Part B: Operation support system impact (see Figures 6 and 7)

This consists of:
a) User interfaces
   The various user interfaces of OSS systems are enhanced to allow creation, manipulation and display of tags,
b) Storage and manipulation
   - OSS applications and their corresponding backend systems, i.e. the data bases, are enhanced to use the tagging infrastructure to facilitate the user interface action.
   - Intelligent systems, e.g. rule engines, expert systems, which are part of the OSS are also expanded to allow automatic creation of tags. This can be seen as a logical extension of their current characteristic, i.e. of mimicking human actions.

### Novelty of the ideas:

- Use of tagging for flexible human understandable categorization of OSS information.
- Use of tagging to capture human intelligence, e.g. correlation, root cause, etc., into the OSS systems.
- Use of tagging for flexible labeling of OSS information by a community of relevant experts and deriving meaningful information thereof.
- Use of tagging as a means of enhancing intelligent/expert systems that automate a certain amount of operator intelligence in managing networks.

The technical benefits may be a simple and flexible capture of human intelligence into OSS systems using modern techniques.

The productivity gains may be:
- Operators get a consolidated overview of related items across the entire OSS hierarchy which has not been available so far.
- Operators are able now to easily identify and mark information.
- Operators can quicken their operational processes and knowledge sharing by the use of tags or labels.

Cost benefits may be:
- Efficient monitoring of the network and quick resolution of issues save operational expenditure (OPEX).

Although primarily a telecommunication network was described it is also possible to consider other applications as well.

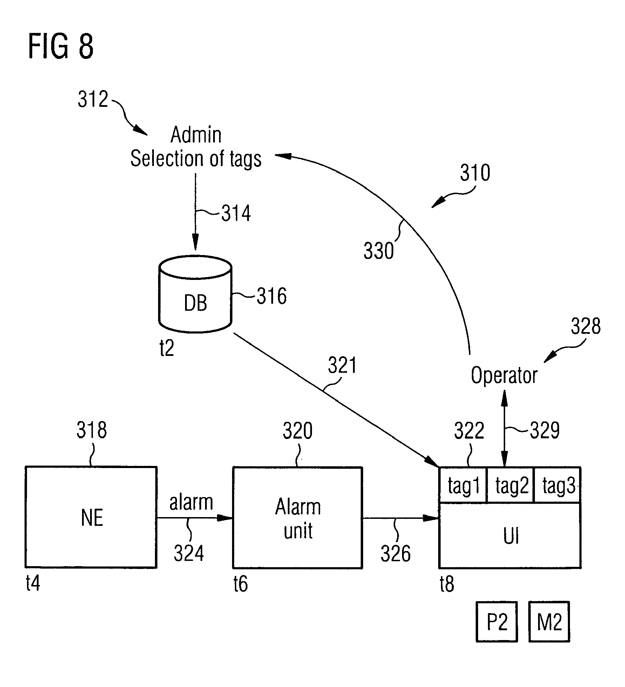

A method of supplementing second data to first data generated in a network 310 will be described in the following with reference to Figures 8 to 15. The method is explained with regard to the tagging of alarms in EMS/NMS (EMS, Element Management System; NMS, Network Management System).

Correlation means in this context, for instance, that different alarms are generated by the same event, for instance a power failure in one network element. On the other hand a correlation is possible between alarms. Correlation is done between two or more alarms base on attribute values and thresholds.

There may be at least one or all of the following layers in a management system of the network 310:
- business layer,
- service layer,
- network layer, and
- element layer.

The management may relate to at least one or to all of the following fields:
- configuration,
- accounting,
- performance,
- security, and
- fault management.

There are, for instance, network elements produced by different vendors each having his own network element software. Network management software is able to access the vendor specific software by using standardized interfaces, e.g., SNMP (Simple Network Management Protocol), CORBA (Common Object Request Broker Architecture), TMF (Tele Management Forum) etc.

A fault is an unexpected behavior. The typical content of a fault message or of fault data is at least one or all of the following data:
- data to specify a class of problem, for instance communication alarm,
- data to specify a possible cause of problem, for instance power failure, network failure, etc.,
- data to specify the network element that generated the fault data, for instance a hardware unit or a software unit, e.g., a managed object class (MOC) and an instance identifier (MOC-ID),
- optional additional text data, i.e. a note or a comment.

Contrary to alarms, events are generated during normal operation of the network and the network elements, for instance according to SNMP (Simple Network Management Protocol).

Figure 8 illustrates a network 310 and parts of a network management system for managing the network 310. An administrator 312 of network 310 proposes 314 a selection of tags. The proposed tags are stored in a data base 316 at time t2. Alternatively, the tags may be created by negotiations between a group of users as mentioned above with regard to Figures 1 to 7.

The network 310 comprises a network element 318. The network 310 may be a telephone network based on channel switching. Alternatively or additionally, the network 310 is a data communication network, for instance based on the Internet Protocol.

Furthermore, the following parts of the network management system are shown in Figure 8:
- an alarm unit 320,
- a user interface 322.

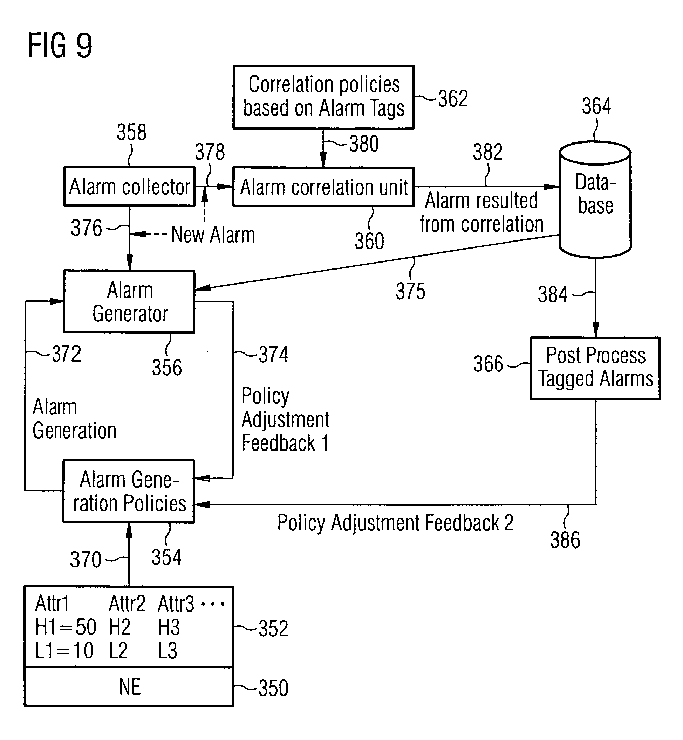

The EMS comprises data base 316, alarm unit 320 and user interface 322. An example of alarm unit 320 is given in Figure 9.

At time t4, i.e. after time t2, data 324 of an alarm are created in network element 318. This alarm data 324 are sent to alarm unit 320. Alarm unit 320 processes the.alarm data 324 thereby transferring the alarm data to a user interface as shown by reference sign 326 at time t6.

At time t8, the alarm data 324 are displayed to an operator 328 or to the administrator 314. A list comprising proposed tags is also shown to the user (operator and/or administrator), see tag1, tag2, tag3. The items of the list may be read from data base 316, see 331. The user selects, see 329, one or more tags from the list. The selected tags are stored in a data base together with the alarm data 324.

If the user 328 needs a tag that is not in the proposed list he can give the administrator 312 a feedback 330. The administrator 312 may then expand the list. Typically, there are a plurality of operators in the network 310, for instance more than 100 operators. It is alternatively possible to negotiate the tags in the group of users. Such negotiations may comprise voting. Alternatively, indirect voting is possible by using an infrastructure that allows to display the most used tags and/or the most recently used tags etc.

Figure 8 also shows a processor P2 and memory M2 for storing program data. The methods described in the following are performed if the processor executes instructions of the stored program data. Alternatively, it is possible to use an electronic hardware without using software to implement the methods. Hardware and/or software solutions are also used to implement the embodiments of Figure 9 to 15.

Figure 9 illustrates the processing of alarms generated in network 310. The following units are shown in Figure 9:
- a network element 350,
- a memory 352 of network element 318,
- an alarm generation policy unit 354,
- an alarm generation unit 356,
- an alarm collector unit 358,
- a correlation unit 360,
- a correlation policy unit 362,
- a data base 364, and
- a post processing unit 366.

The network element 350 is for instance network element 318. Types of network elements are for instance circuit switched exchanges, routers, switches, access nodes.

The memory 352 of network element 318 stores threshold values for attributes attr1, attr2, attr3 of network element 318. Attribute attr1 may be a parameter which value corresponds to the amount a data buffer is filled. H1, H2 and H3 are upper thresholds for the corresponding attributes attr1, attr2, attr3. H1 has for instance the initial value of 80, i.e. an alarm may be generated if more than 80 percent of the data buffer is filled. L1, L2, L3 etc. are lower thresholds for the corresponding attributes attr1, attr2, attr3.

The alarm generator unit 356 and the alarm generation policy unit 354 are for instance units of network element 350.

If thresholds H1, H2, H3, L1, L2, L3 are not met in network element 350 this is signaled 370 to alarm generation policy unit 354. If the policy, i.e. a specific rule, is true, this is signaled 372 to the alarm generation unit 356. The alarm generation unit 356 creates an alarm 376 that is sent to the alarm collector unit 358 which is typically outside the network element 350.

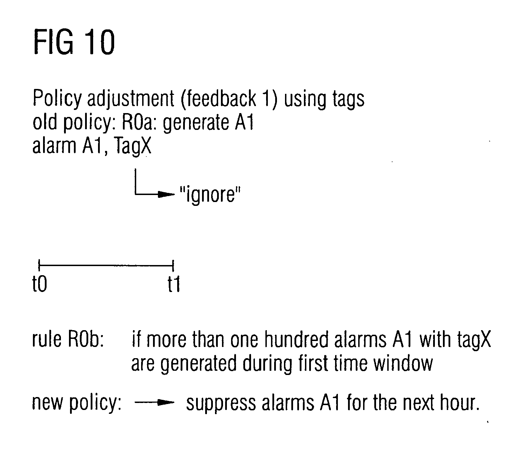

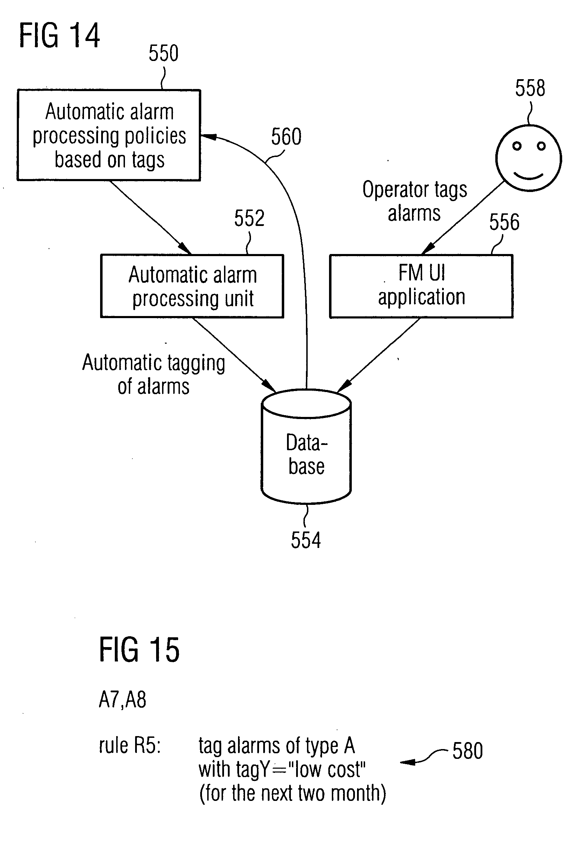

The alarm generation unit 356 also has control function. The alarm generation unit 356 controls alarm generation policy unit 354 to automatically modify the rules for alarm generation, see feedback 1 and reference sign 374. This will be explained in more detail below with regard to Figure 10. An arrow 375 indicates reading of data base 364 by alarm generation unit 356. If immediate action is necessary based on the tagged alarms this is done by feedback1. With regard to Figure 14 automatic alarm tagging will be described in more detail.

The alarm collector unit 358 collects alarms of more than one network element. The data of these alarms may be structured according to different protocols. The alarm collector unit 358 transfers the alarms to the alarm correlation unit 360, see arrow 378.

The correlation unit 360 correlates the alarms 378 to single events in the network 310. This results in the suppression of many alarms and makes the processing of alarms possible with fewer processing power and fewer OPEX. The correlation that is performed by correlation unit 360 is based on correlation policies or correlation rules that are stored in correlation policy unit 362 according to the input of the administrator or an authorized operator. During operation alarm correlation unit 360 reads the stored rules, see arrow 380.

Alarms that are not suppressed by the correlation unit 360 are stored 382 in data base 364. Data base 364 may be the same data base like data base 316 or a different data base. Data base 364 is used for post processing of the alarms, especially by users or automatically. The alarms stored in data base 364 are read during post processing using the management system. It is possible to search for tagged alarms. Alternatively or additionally, it is possible to tag the alarms automatically or manually.

The post processed alarms may be used to change the alarm generation rules, see feedback 2 or arrow 386. Feedback 2 may involve operator action or may be done automatically.

The processing of alarms using the units 350 to 366 is described in detail with regard to Figures 10 to 13.

Figure 10 illustrates alarm generation policy adjustment (feedback 1) using tags. It is assumed that an old policy rule R0a is:
generate alarm A1 if H1 is exceeded by the value of attribute A1.

Furthermore, it is assumed that alarm A1 is automatically tagged by alarm generation unit 356 with tagX. TagX may be for instance the text "ignore".

Further, it is assumed that there is a rule R0b:
IF (premise or assumption) more than hundred alarms A1 with tagX are generated during a first time window THEN (implication) suppress alarms A1 for the next one hour.

The first time window t0, t1 is comparable short, for instance less than one month. In the example, the first time window has a length of thirty minutes.

If rule R0b is fulfilled it will overrule rule R0a, i.e. the policy is changed depending on tags, for instance on tagX.

Other alarm generation rules that involve tags are possible as well. Additionally there may be alarm generation rules that do not use tags.

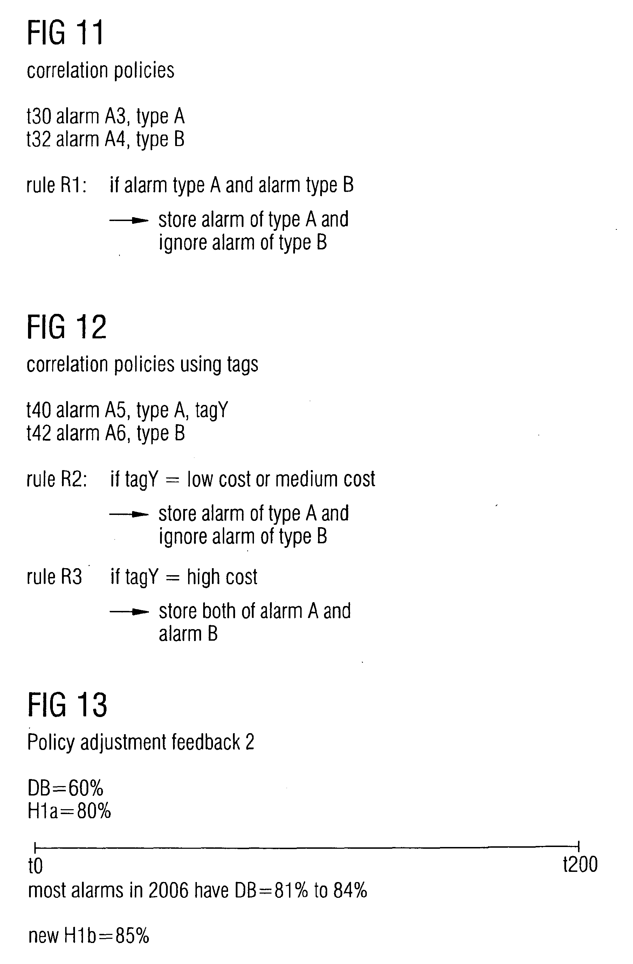

Figure 11 illustrates alarm correlation by alarm correlation unit 360 without using tags for comparative purposes. It is assumed that an alarm A3 of a type A (for instance class of problem) is received by the unit 360 at time t30. Further, it is assumed that an alarm A4 of a different type B is received at time t32 immediately after alarm A3 has been received.

Furthermore, it is assumed that there is the following correlation rule R1:
IF alarm of type A and alarm of type B are present in the same time period
THEN store alarm of type A in data base 364 and suppress alarm of type B.

Figure 12 illustrates alarm correlation policy using tags. It is assumed that an alarm A5 of type A is received by the unit 360 at time t40. Further, it is assumed that an alarm A6 of a different type B is received at time t42 after alarm A6 has been received.

Furthermore, it is assumed that there is the following correlation rule R2:
IF alarm of type A and alarm of type B are present in the same time period and if alarm A is tagged by tagY, value "low costs" or "medium costs"
THEN store alarm of type A in data base 364 and suppress alarm of type B.

A rule R3 is:
IF alarm of type A and alarm of type B are present in the same time period and if alarm A is tagged by tagY, value "high costs"
THEN store alarm of type A in data base 364 and also store alarm of type B in data base 365.

Rule R3 effects that more alarms are stored if the alarm may result in higher costs. Thus, it is possible to find the cause of these alarms easier.

Rules R2 and R3 involve tags. Other correlation rules that involve tags are possible as well. Unit 362 may store correlation rules with tags and other rules without tags.

Figure 13 illustrates alarm generation policy adjustment (feedback 2) using tags. It is assumed that an attribute DB relates to the percentage of memory that is filled in a data base. The attribute DB, for instance, has the value 60 percent. A threshold Hla equals 80 percent. Therefore, no alarm will be generated for the current value of attribute DB.

During a comparable long period between time t0 and time t200, for instance one year, e.g., the year 2006, most alarms that were generated had an attribute value DB in the range from 81 percent to 84 percent. The administrator decides to select a new higher threshold H1b of 85 percents to reduce the amount of alarms in the next year.

In another example, the alarm generation policies are changed based on post processing of tagged alarms and/or based on the tags of these alarms, see data transfer 386. Thus, it is possible to change rules R0, R2, R3 that contain tags. Such rules may also be changed based on processing of untagged alarms. Furthermore, it is possible to automate the long term adjustment.

Figure 14 illustrates an automatic alarm tagging environment, comprising:
- a processing policy unit 550,
- an alarm processing unit 552,
- a data base 554, and
- a user interface unit 556.

The processing policy unit 550 stores rules for the automatically processing of alarms. These rules are used by automatic alarm processing unit 552 for automatically processing of alarms. Some or all of these rules stored in unit 550 may include tags in the premise or in the implication. An example for a rule is given in Figure 15 below.

The automatic alarm processing is done after an alarm is stored in data base 554. Data base 554 may be the same like data base 364. Furthermore, the automatic alarm processing may be performed before the alarms are shown to the operator 558 using the fault management user interface unit 556.

Arrow 560 indicates that the alarms may be stored in data base 554 before and after automatic alarm processing. It is alternatively possible to use two data bases for this purpose.

Figure 15 illustrates a rule R5 for automatic tagging of alarms. It is assumed that there are two untagged alarms A7, A8 stored in data base 554.

The rule R5 is:
tag alarms of Type A with tagY = "low cost"

Thus, it is automatically checked if alarms A7 and A8 are of type A. This may be true for alarm A7 but not for alarm A8. Therefore, second data or tag data are supplemented to data of alarm A7. No tagging is performed for alarm A8 because the rule R5 is not fulfilled.

In another example, the rule R5 is extended, see reference sign 580, to relate to alarms generated during a given time period, for instance during the next two month. Alternatively or additionally, the operator 558 may perform the alarm tagging manually, for instance using additional tags.

In the following there is a summary of the technical teachings described with reference to Figures 8 to 15.

Currently as part of FM (Fault Management) in NMS/EMS no user defined/configurable tags are possible for categorizing alarm data. Tags are a very useful mechanism for classifying objects based on various parameters.

An operator of a management network could use "notes" or comments to add user specific data to an alarm. This data would not be usable for automation of alarm processing. The free form of alarm notes would allow subjective understanding of the notes. Post processing rules based on operator notes would be very complicated and not effective.

It would be possible to suppress alarms based on two categories: "true" and "false". The idea described above is not just a differentiation of alarms based on relevance of the alarm but on any parameter that is needed by the operator, for example, effort for clearing an alarm. Tagging of alarms plays an important role in the idea described above.

The problems stated above are solved by objective representation of various tags being additional (intelligent) information about the alarm. This gives no scope for subjective interpretation and leads to easily automatable systems. A Tag set may be configurable by the operator.

There are the following advantages:
1. Post processing of tagged alarms is possible to find alarm correlation.
2. In addition or alternatively to the above mentioned features, tagging of alarms can be done based on many other parameters, for example:
   a) Correction effort (e.g., "low", "medium", "high"),
   b) Geographical location (e.g., "Bangalore", "Delhi" etc.),
   c) Revenue loss because of the alarm (e.g., "less than or equal to $10,000 (ten thousand)", "more than $10,000 and less than or equal to $100,000" and "more than $100,000")
3. Automatic tagging can be done for all alarms or also for events, especially for correlated alarms.
4. Alarm generation thresholds can be changed by the feedback based on post processed data.

Use case 1: Tagging of alarms by operator, see Figure 8

### Operator workflow

1. EMS administrator proposes possible values for alarm tags. The values may be stored in a data base.
2. NE (network element)(or EM (element manager) itself) raises an alarm due to a fault.
3. Alarm is received by the EMS and shown to operator via fault management UI (user interface).
4. Operator sees the alarm and tags the alarms based on the tags created by the administrator.
5. Sub work flow - 1
   a) Fault management UI shows and optionally groups the alarms based on the tags. It could be possible to organize tags such that, for instance, "most used", "most recently used" tags are shown with different color, font etc.
   b) When operator selects a tag, alarms with this tag are shown so that operator gets a view of all alarms belonging to a specific category.

### Use case 2: alarm correlation based on tags, see Figure 9

Tags can also be used for alarm correlation. This will increase the efficiency of alarm correlation and results in fewer alarms that had to be processed by the operator. Figure 9 shows various units involved in alarm correlation.

Description of components in Figure 9:
- Attr1, Attr2, Attr3 ... - These are the NE attributes based on which alarms are generated automatically.
- H1, H2, H3 ... - These are the upper thresholds for the corresponding attributes.
- L1, L2, L3 ... - These are the lower thresholds for the corresponding attributes.
- The alarm generator 356 generates the alarms based on alarm generation policies that are dependent on the attributes and how they have to be correlated. The correlation factors are based on attribute transitions, i.e. change of attribute values, as well as attribute thresholds or based on various values of attributes.
- Feedback devices 356, 366 - these adjusts the threshold values of the different attributes being monitored for automatic alarm generation.

a) Policy adjustment feedback 1 - This feedback is based on the analysis of the thresholds and transitions over a configurable time period or time window. This will refine the attribute values for the values depending on the tags assigned automatically (see Figure 14) or by operator to the generated alarms during a short time interval, for instance in the range of one hour to one day.
b) Policy adjustment feedback 2 - This feedback is based on the post processing of the generated alarms stored in the alarm data base over an extended period of time. Based on the tags assigned to the different alarms the correlation can be done better in addition to using alarm attribute values and/or thresholds for correlation.

### Flow:

1. EMS administrator creates policies for alarm correlation. The policies typically contain rules for various parameters like severity, probable cause. In addition to these standard attributes of alarms, tags can also be used so that more meaningful correlation is possible.
2. NE sends alarm due to a fault.
3. Alarm collector receives the alarm and forwards the alarms to Alarm correlation unit.
4. Alarm correlation unit correlates based on policies created by administrator. During correlation, any redundant alarm is discarded and useful alarm is stored into the data base.

### Automatic alarm processing, see Figure 14

Automatic alarm processing is a feature through which various steps of alarm processing, for instance acknowledgement, symptom collection can be automated. Note that this is different from alarm correlation because this alarm processing is done after an alarm is stored in the data base and before the alarm is shown to the operator.

### Description of components shown in Figure 14:

- FM (fault management) UI (user interface) application - This application shows the alarms to the operator and also provides features for various alarm processing actions as described above.
- automatic alarm processing unit - This application runs in the background and takes actions on the alarms based on the policies created by the EMS administrator. The policies contain actions like:
- acknowledgement, e.g., an administrator or operator inserts his name to indicate that he has seen the alarm,
- clearance based on the alarm attributes, e.g., on severity or probable cause, i.e. clearance means to take some actions, for instance delete data of a data buffer or modify a threshold; the actions can also include alarm tagging.
- Data base - Alarms, tags and policies are stored in the data base.

### Flow:

1. EMS administrator creates rules for this automatic alarm processing,
2. NE sends an alarm and it is stored in data base after necessary correlation,
3. Automatic alarm processing unit processes the alarms stored in the data base after correlation based on the policies and if alarm matches the condition and if the action is applying of tags then it applies the specific tag to the alarm.

### List of reference signs

- 8: telecommunication network
- 10: TMN system
- 12: support system
- 14: tagging system
- 16: interface
- 18: user
- BMDB: business manager data base
- SMDB: service manager data base
- NMDB: network manager data base
- EMDB: element manager data base
- NEDB: network element data base
- BMP: business manager program
- SMP: service manager program
- NMP: network manager program
- EMP: element manager program
- NE1, NE2: network element
- 20: tag data base
- 22: tag engine
- 24: tag interface
- 26: portal program
- 30 to 42: method step
- 50: tag data
- 52 to 60: data field
- 70: data list
- 72: to 80 data field
- 90: relation
- 100: displayed data
- 102: title
- 104 to 110: displayed field
- 120 to 126: sub title
- 130 to 134: item
- 140: input field
- 150: displayed data
- 152: title
- 154: displayed field
- 156: sub title
- 158: searched text
- 159: found items
- 160: input field
- 200: displayed data
- 202: title
- 210 to 214: displayed field
- 220 to 224: sub title
- 230 to 234: item
- 235: network data
- 236: comment data
- 237: "create new" item
- 250: displayed data
- 252: title
- 254: displayed field
- 256: diagram
- 258: sub title
- 260: item
- 261: network data
- 262: comment data
- 263: "create new" item
- 310: network
- 312: administrator
- 314: proposing tags
- 316: data base
- 318: network element
- 320: alarm unit
- 322: user interface
- 324: alarm data
- 326: data transfer
- 328: operator/administrator
- 329: user selection
- 330: feedback
- 350: network element
- 352: memory
- 354: generation policy unit
- 356: generation unit
- 358: collector unit
- 360: correlation unit
- 362: correlation policy unit
- 364: data base
- 366: post processing unit
- 370 to 386: data transfer
- 550: processing policy unit
- 552: alarm processing unit
- 554: data base
- 556: user interface unit
- 558: operator/administrator
- 560: arrow
- A1 to A8: alarm data
- P2: processor
- M2: memory
- t0 to t200: time
- R0a to R5: rule

## Claims

1. Method of processing network related data, comprising:
generating first data during the operation of a network, supplementing second data to the first data (235, 261).

2. Method according to claim 1, wherein the method comprises: updating (40) a data base (20) using the second data (236, 262),
wherein the updating comprises searching the data base (20) for an entry (50) containing the second data (236, 262).

3. Method according to claim 2, wherein the updating (40) is done automatically.

4. Method according to claim 2 or 3, wherein the updating comprises:
- incrementing a counter (54) that counts how often data that comprise the second data (236, 262) is used.

5. Method according to one of the claims 2 to 4, wherein the updating comprises:
- storing time data (56) that indicate when the second data was used, especially when it was last used.

6. Method according to one of the claims 2 to 5, wherein the updating comprises:
- storing relationship data (58, 70) describing the relationship of the second data (236, 262) to at least third data that are also used to comment or to describe the first data (235, 261).

7. Method according to one of the preceding claims, wherein the supplementing (34) of the second data is done automatically.

8. Method according to one of the preceding claims, wherein the adding comprises:
automatically suggesting the second data (236, 262).

9. Method according to claim 8, wherein the suggesting comprises:
searching the data base (20) based on a part (240) of an input,
suggesting second data (236, 262) that were found in an entry of the data base (20) and that comprise the part (240) of the input.

10. Method according to one of the preceding claims, wherein the network (8) is one of:
a telecommunication network,
a computer network,
power network.

11. Method according to one of the preceding claims, wherein the first data (235, 261) are one of:
configuration data,
accounting data,
performance data,
security data,
fault data.

12. Method according to one of the claims 1 to 10, wherein the first data are a command that is executed in the network (8), preferably a command to configure the network (8).

13. Method according to one of the preceding claims, wherein the second data (236, 262) explain the first data (235, 261) in more detail or wherein the second data (236, 262) describe the reason for generating the fist data (235, 261).

14. Method according to one of the preceding claims, wherein the second data are text data or comprise text data.

15. Method according to one of the preceding claims, comprising:
performing a search request for network data by using the second data (236) as a search criterion.

16. Device (10),
comprising:
a processing element (P), and
a memory (M) for storing program data to execute the following method:
supplementing (34) second data (236, 262) to first data (235, 261) that are generated during the operation of a network (8), and
automatically updating (40) a data base (20) by using the second data (236, 262),
the updating comprising searching the data base (20) for an entry (50) containing the second data (236, 262).

17. Device (10) according to claim 16, comprising:
a data base (20) for storing entries based on the second data (236, 262).

18. Device (10) according to claim 16 or 17, wherein the memory (M) stores data to execute the method according to one of the claims 2 to 15.

19. Computer program product (M) comprising at least one computer readable storage medium (M) having computer readable program code stored therein,
the computer readable program code comprising:
a first executable portion for:
supplementing (34) second data (236, 262) to first data (235, 261) that are generated during the operation of a network (8), and
automatically updating (40) a data base (20) by using the second data (236, 262),
the updating comprising searching the data base (20) for an entry (50) containing the second data (236, 262).

20. Computer program product (M) according to claim 19, comprising at least a portion to execute a method according to one of the claims 2 to 15.

21. Method according to claim 1, wherein the method comprises:
providing a rule for automatically generating second data (tagX, tagY).

22. Method according to claim 21, wherein the first data (A7) are stored in a data base (358, 554),
and wherein the second data (tagY) are supplemented to the first data (A1) after storing the first data (A7), preferably after correlation.

23. Method according to claim 22, wherein the first data (A7) are generated without the second data (tagY).

24. Method according to claims 22 or 23, wherein the first data (A7) and the second data (tagY) are shown to a user for the first time after supplementing the second data (tagY) to the first data (A7).

25. Method according to claim 21, wherein the supplementing is done together (352, 356) with the generation of the first data (A1).

26. Method according to claim 25, wherein a plurality of data are correlated (360) to a single event in the network (310) after supplementing the second data (tagX).

27. Method according to claim 26, wherein the second data (tagX) or both the first data (A1) and the second data (tagX) are used for correlation (R2, R3).

28. Method according to one of the claims 25 to 27, wherein a correlation rule (R2, R3) depends on the second data (tagY) or on the content of the second data (tagY).

29. Method according to claim 25, wherein an alarm generation rule (R0b) depends on the content of the second data (tagX).

30. Method according to claim 29, wherein the rule automatically replaces another rule (R0a) for alarm generation (374), preferably before the second data (tagX) are shown to a user.

31. Method according to one of the claims 21 to 30, wherein the first data (A1 to A8) are shown to a user (328, 558) together with the second data (tagX, tagY) or wherein the user supplements the second data (tagX, tagY) to the first data (A1 to A8),
and wherein the second data (tagX, tagY) or both the first data (A1 to A8) and the second data (tagX, tagY) are used to modify (386) an alarm generation rule.

32. Method according to one of the claims 21 to 31, wherein the first data (A1 to A8) are alarm data that is created because there was an unexpected event in a network element of the network (310) or in the network (310).

33. Method according to one of the claims 21 to 32, wherein the second data (tagX, tagY) are text data or comprises text data.

34. Method according to one of the claims 21 to 33, wherein a data base is updated using the second data (tagX, tagY),
and wherein the updating comprises searching the data base for an entry containing the second data (tagX, tagY).

35. Method according to claim 34, wherein the updating is done automatically.

36. Method according to claim 34 or 35, wherein the updating comprises:
incrementing a counter that counts how often data that comprises the second data (tagX, tagY) are used.

37. Method according to one of the claims 34 to 36, wherein the second data are data that are selected from a plurality of pre-given items.

38. Device (552, 354),
comprising:
a processing element (P2), and
a memory (M2) for storing program data to execute the following method:
providing a rule for automatically generating second data (tagX, tagY),
generating first data (A1 to A8) during the operation of a network (310),
supplementing second data (tagX, tagY) to the first data (A1 to A8) by applying the provided rule.

39. Device according to claim 38, wherein a method is performed according to one of the claims 22 to 37.

40. System,
comprising the device (552, 354) of claim 38 or 39, and a correlation unit (362) that correlates a plurality of data to a single event in the network (310) by using the second data (tagX, tagY).

41. Computer program product (M2) comprising at least one computer readable storage medium (M2) having computer readable program code stored therein,
the program code comprising:
a first executable portion for:
providing a rule for automatically generating second data (tagX, tagY),
generating first data (A1 to A8) during the operation of a network (310),
supplementing second data (tagX, tagY) to the first data (A1 to A8) by applying the provided rule.

42. Product (M2) according to claim 41, comprising at least a portion to execute a method according to one of the claims 22 to 37.
